# EUROPEAN PATENT APPLICATION

(11) **EP 3 376 459 A1**
(43) Date of publication of application: **19.09.2018**
(21) Application number: 18156920.3
(22) Date of filing: 15.02.2018
(51) Int. Cl.: G06Q 30/06

(54) **PORTABLE TERMINAL FOR CONFIRMING A COMMODITY PURCHASE HISTORY**

(30) Priority: 15.03.2017 JP 2017050113
(71) Applicant: Toshiba TEC Kabushiki Kaisha, Tokyo 141-0032 (JP)
(72) Inventor: Hatanaka, Yuichiro, Tokyo, 141-8562 (JP)
(74) Representative: Hoffmann Eitle

(57) **Abstract**

A portable terminal according to an embodiment confirms a commodity purchase history. A storage device stores purchase history data including an identification code of commodities previously purchased, and an exclusion condition for which a commodity is excluded from confirming the commodity purchase history. An input device receives input of an identification code corresponding to a target commodity. A processor determines whether the received identification code received satisfies the exclusion condition. If the commodity corresponding to the received identification code satisfies the exclusion condition, a display device displays an exclusion screen indicating that the target commodity is not a target for confirming the commodity purchase history. If the commodity corresponding to the received identification code does not satisfy the exclusion condition and if the received identification code is included in the stored purchase history data, the display device displays a warning screen indicating that the target commodity was previously purchased.

## Description

### CROSS-REFERENCE TO RELATED APPLICATION

This application is based upon and claims the benefit of priority from Japanese Patent Application No. 2017-050113, filed March 15, 2017, the entire contents of which are incorporated herein by reference.

### FIELD

Embodiments described herein relate generally to a portable terminal for confirming a commodity purchase history.

### BACKGROUND

Whether or not a commodity desired to be purchased by a consumer has been previously purchased by the consumer can be determined by referring to purchase history data of the consumer.

In such a system, all commodities purchased over a predetermined period are determined to be repetitive purchases. Therefore, for example, a commodity such as milk which is repetitively purchased over short periods may be detected as frequently purchased in the purchase history.

That is, since the determination of repeat purchase is performed on even a commodity having a low necessity for confirming repeat purchase, it may be difficult to confirm repeat purchase of other commodities for which repeat purchase confirmation is desired by a consumer.

### SUMMARY OF THE INVENTION

One of the objects of the present invention is to improve prior art techniques and overcome at least some of the prior art problems as for instance above illustrated.

According to a first aspect of the present invention, it is provided a portable terminal for confirming a commodity purchase history, the portable terminal comprising: a display device; a storage device that stores:
purchase history data including an identification code of each of a plurality of commodities previously purchased by a user of the portable terminal, and
exclusion condition data including an exclusion condition for which a commodity is excluded from confirming the commodity purchase history;
   an input device configured to receive input of an identification code corresponding to a target commodity; and
   a processor configured to:
      determine whether the received identification code received satisfies the exclusion condition,
if the commodity corresponding to the received identification code satisfies the exclusion condition, control the display device to display an exclusion screen indicating that the target commodity is not a target for confirming the commodity purchase history,
if the commodity corresponding to the received identification code does not satisfy the exclusion condition, determine whether the received identification code is included in the stored purchase history data, and
if the received identification code is included in the stored purchase history data, control the display device to display a warning screen indicating that the target commodity was previously purchased.

In the first aspect, optionally, the portable terminal further comprises:
a communication interface configured to communicate with an electronic receipt server, wherein the processor is further configured to:
   control the communication interface to acquire, from the electronic receipt server, electronic receipt data corresponding to a user identification that identifies the user, and
   control the storage device to update the purchase history data to include an identification code of at least one commodity included in the acquired electronic receipt data.

In the first aspect, optionally, the processor is further configured to determine whether the at least one commodity corresponding to the identification code included in the acquired electronic receipt data satisfies the exclusion condition, and
the processor controls the storage device to not store the identification code corresponding to the identification code that satisfies the exclusion condition.

In the first aspect, optionally, the input device is a camera that generates image data, and
the processor is further configured to extract the identification code corresponding to the target commodity from generated image data corresponding to an image of the target commodity.

In the first aspect, optionally, the processor is further configured to:
extract, from generated image data corresponding to an image of a paper receipt, an identification code of at least one commodity included in the paper receipt, and
control the storage device to update the purchase history data to include the identification code of at least one commodity extracted from the image data corresponding to the image of the paper receipt.

In the first aspect, optionally, the processor is further configured to:
if the commodity corresponding to the received identification code does not satisfy the exclusion condition and if the received identification code is not included in the stored purchase history data, control the display device to display a not-purchased screen indicating that the target commodity was not previously purchased.

In the first aspect, optionally, the display device is a touch screen device configured to receive, from the user, input of an identification code corresponding to an identification code corresponding to a previously purchased commodity, and
the processor is further configured to control the storage device to update the purchase history data to include the identification code input via the touch screen device.

According to a second aspect of the present invention, it is provided a method for confirming a commodity purchase history with a portable terminal, the method comprising: storing, in a storage device of the portable terminal, purchase history data including an identification code of each of a plurality of commodities previously purchased by a user of the portable terminal;
storing exclusion condition data including an exclusion condition for which a commodity is excluded from confirming the commodity purchase history;
receiving input of an identification code corresponding to a target commodity;
determining whether the received identification code received satisfies the exclusion condition;
if the commodity corresponding to the received identification code satisfies the exclusion condition, controlling a display device of the portable terminal to display an exclusion screen indicating that the target commodity is not a target for confirming the commodity purchase history;
if the commodity corresponding to the received identification code does not satisfy the exclusion condition, determining whether the received identification code is included in the stored purchase history data; and
if the received identification code is included in the stored purchase history data, controlling the display device to display a warning screen indicating that the target commodity was previously purchased.

The method of the second aspect includes, optionally: acquiring, from and electronic receipt server, electronic receipt data corresponding to a user identification that identifies the user; and
updating the purchase history data to include an identification code of at least one commodity included in the acquired electronic receipt data.

The method of the second aspect included, optionally, determining whether the at least one commodity corresponding to the identification code included in the acquired electronic receipt data satisfies the exclusion condition, wherein the purchase history data is not updated to include the identification code corresponding to the identification code that satisfies the exclusion condition.

In the second aspect, optionally, the input of the identification code corresponding to a target commodity is image data corresponding to an image of the target commodity, the method further comprising:
extracting the identification code corresponding to the target commodity from the image data.

The method of the second aspect optionally includes: extracting, from generated image data corresponding to an image of a paper receipt, an identification code of at least one commodity included in the paper receipt; and
updating the purchase history data to include the identification code of at least one commodity extracted from the image data corresponding to the image of the paper receipt.

The method of the second aspect optionally includes: if the commodity corresponding to the received identification code does not satisfy the exclusion condition and if the received identification code is not included in the stored purchase history data, controlling the display device to display a not-purchased screen indicating that the target commodity was not previously purchased.

In the second aspect, optionally, the display device is a touch screen device, the method further comprising: receiving, via the touch screen device, input of an identification code corresponding to an identification code corresponding to a previously purchased commodity; and updating the purchase history data to include the identification code input via the touch screen device.

According to a third aspect of the present invention, it is provided a non-transitory computer readable medium causing a portable terminal to perform a method for confirming a commodity purchase history, the method comprising:
storing, in a storage device of the portable terminal, purchase history data including an identification code of each of a plurality of commodities previously purchased by a user of the portable terminal;
storing exclusion condition data including an exclusion condition for which a commodity is excluded from confirming the commodity purchase history;
   receiving input of an identification code corresponding to a target commodity;
determining whether the received identification code received satisfies the exclusion condition;
if the commodity corresponding to the received identification code satisfies the exclusion condition, controlling a display device of the portable terminal to display an exclusion screen indicating that the target commodity is not a target for confirming the commodity purchase history;
if the commodity corresponding to the received identification code does not satisfy the exclusion condition, determining whether the received identification code is included in the stored purchase history data; and
if the received identification code is included in the stored purchase history data, controlling the display device to display a warning screen indicating that the target commodity was previously purchased.

In the third aspect, optionally, the method further comprising:
acquiring, from and electronic receipt server, electronic receipt data corresponding to a user identification that identifies the user; and
updating the purchase history data to include an identification code of at least one commodity included in the acquired electronic receipt data.

In the third aspect, optionally, the method further comprising:
determining whether the at least one commodity corresponding to the identification code included in the acquired electronic receipt data satisfies the exclusion condition, wherein
the purchase history data is not updated to include the identification code corresponding to the identification code that satisfies the exclusion condition.

In the third aspect, optionally, the input of the identification code corresponding to a target commodity is image data corresponding to an image of the target commodity, the method further comprising:
extracting the identification code corresponding to the target commodity from the image data.

In the third aspect, optionally, the method further comprising:
extracting, from generated image data corresponding to an image of a paper receipt, an identification code of at least one commodity included in the paper receipt; and
updating the purchase history data to include the identification code of at least one commodity extracted from the image data corresponding to the image of the paper receipt.

In the third aspect, optionally, the method further comprising:
if the commodity corresponding to the received identification code does not satisfy the exclusion condition and if the received identification code is not included in the stored purchase history data, controlling the display device to display a not-purchased screen indicating that the target commodity was not previously purchased.

### DESCRIPTION OF THE DRAWINGS

FIG. 1 is a block diagram illustrating a configuration of a portable terminal according to an embodiment.
FIG. 2 is a flowchart illustrating processing of a history update mode.
FIG. 3 is a flowchart illustrating processing of a duplication confirmation mode.

### DETAILED DESCRIPTION

Embodiments provide a portable terminal for confirming a commodity purchase history.

A portable terminal according to an embodiment confirms a commodity purchase history. A storage device stores purchase history data including an identification code of each of a plurality of commodities previously purchased by a user of the portable terminal, and exclusion condition data including an exclusion condition for which a commodity is excluded from confirming the commodity purchase history. An input device receives input of an identification code corresponding to a target commodity. A processor determines whether the received identification code received satisfies the exclusion condition. If the commodity corresponding to the received identification code satisfies the exclusion condition, a display device displays an exclusion screen indicating that the target commodity is not a target for confirming the commodity purchase history. If the commodity corresponding to the received identification code does not satisfy the exclusion condition, the processor determines whether the received identification code is included in the stored purchase history data. If the received identification code is included in the stored purchase history data, the display device displays a warning screen indicating that the target commodity was previously purchased.

Hereinafter, an example of an embodiment will be described with reference to the drawings. In this embodiment, a portable terminal having a function as an information processing device will be described. A portable terminal 100 provides a duplication confirmation function (which will be described later) for a consumer as a user of the portable terminal 100.

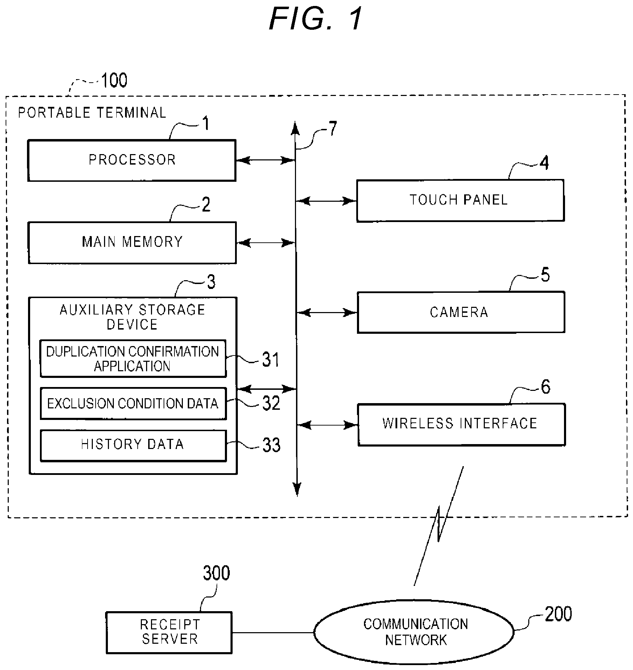

FIG. 1 is a block diagram illustrating the configuration of the portable terminal 100 according to the embodiment.

The portable terminal 100 includes a processor 1, a main memory 2, an auxiliary storage device 3, a touch panel 4, a camera 5, a wireless interface 6, and a transmission system 7.

The processor 1, the main memory 2, and the auxiliary storage device 3 are connected to each other by the transmission system 7, and function as a computer that controls the portable terminal 100.

The processor 1 corresponds to the central controller of the computer. The processor 1 controls the components to realize various functions as the portable terminal 100, in accordance with an operating system or an application program.

The main memory 2 corresponds to the main storage device of the computer. The main memory 2 includes a nonvolatile memory area and a volatile memory area. The main memory 2 stores the operating system or the application program in the nonvolatile memory area. In the main memory 2, data required when the processor 1 performs various types of information processing may be stored in the nonvolatile or volatile memory area. In the main memory 2, the volatile memory area is used as a work area in which data is appropriately rewritten by the processor 1.

The auxiliary storage device 3 corresponds to the auxiliary storage device of the computer. For example, an electric erasable programmable read-only memory (EEPROM) is used as the auxiliary storage device 3. The auxiliary storage device 3 stores data used when the processor 1 performs various types of information processing, or data generated by processing in the processor 1. The auxiliary storage device 3 may store the application program.

The auxiliary storage device 3 stores a duplication confirmation application 31 which is one of application programs, exclusion condition data 32, and history data 33.

The duplication confirmation application 31 is used for realizing a function for confirmation of repetitive purchase and will be described later. The hardware of the portable terminal 100 is typically provided to a user in an initial state where the duplication confirmation application 31 is not stored in the auxiliary storage device 3. The processor 1 downloads the duplication confirmation application 31 via a communication network 200 and stores the downloaded duplication confirmation application 31 in the auxiliary storage device 3, under an operation of the user or the like. The portable terminal 100 may be provided to the user in a state where the duplication confirmation application 31 is already stored in the auxiliary storage device 3.

The exclusion condition data 32 indicates an exclusion condition for determining whether or not each commodity is excluded as a target of repeat purchase confirmation. Specific details of the exclusion condition are not limited. For example, it is assumed that the exclusion condition indicates that "this commodity is included in an exclusion commodity list" or "a category to which this commodity belongs is included in an exclusion category list". The number of exclusion conditions indicated by the exclusion condition data may be one or plural. For example, the exclusion condition data is downloaded along with the duplication confirmation application 31 by the processor 1, and is stored in the auxiliary storage device 3. In this case, the exclusion condition is determined, for example, by a provider or a creator of the duplication confirmation application 31. The processor 1 may update the exclusion condition data 32 stored in the auxiliary storage device 3 in accordance with an operation by the user and the like of the portable terminal 100. That is, the exclusion condition may be arbitrarily changed by the user and the like of the portable terminal 100. Exclusion condition data 32 which is generated by the processor 1 in accordance with an operation by the user and the like of the portable terminal 100 may be stored in the auxiliary storage device 3.

The history data 33 indicates a history of previous commodities purchased by the user of the portable terminal 100. The history data 33 includes at least an identification code of each purchased commodity. The history data 33 may include another piece of information such as purchase date and time, in association with the identification code. The auxiliary storage device 3 is an example of a storage device for storing the history data 33.

The touch panel 4 includes a screen for displaying information to the user. The touch panel 4 also receives an input of an instruction based on the user touching the displayed screen.

The camera 5 captures an image of the field of vision and generates image data.

The wireless interface 6 accesses the communication network 200, and performs wireless data communication via the communication network. For example, the communication network 200 is a mobile network and the Internet. For example, the wireless interface 6 performs data communication with a receipt server 300 via the communication network 200, in order to provide a known electronic receipt service.

The transmission system 7 includes a bus line and an interface circuit. The bus line includes an address bus, a data bus, and the like. The interface circuit is used for connecting the units to the bus line. The transmission system 7 transmits and receives data or a signal between the components which are connected to each other.

Next, an operation of the portable terminal 100 configured as described above will be described. Details of processing described below are just an example and various types of processing to obtain the similar function can be appropriately used.

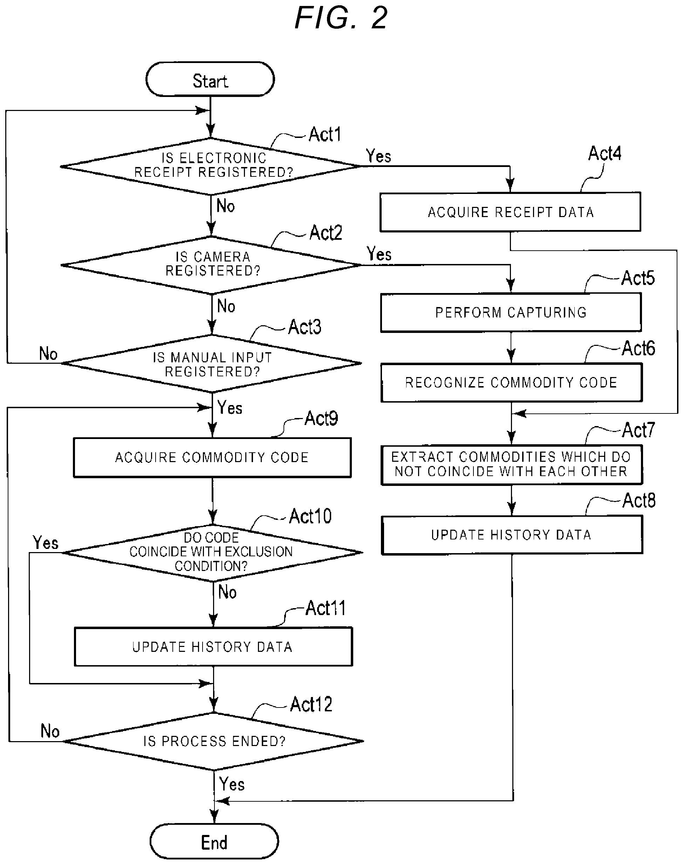

Operation modes based on the duplication confirmation application 31 include a history update mode and a duplication confirmation mode. If an instruction to set the history update mode is received from the user, the processor 1 performs information processing illustrated in FIG. 2.

The processor 1 confirms whether or not an instruction for history registration using an electronic receipt is received (Act 1). If this instruction is not received, the processor 1 determines No in Act 1 and proceeds to Act 2.

The processor 1 confirms whether or not an instruction for history registration using the camera 5 is received (Act 2). If this instruction is not received, the processor 1 determines No in Act 2 and proceeds to Act 3.

The processor 1 confirms whether or not an instruction for history registration by a manual input is received (Act 3). If this instruction is not received, the processor 1 determines No in Act 3 and returns to Act 1.

The processor 1 waits for any of the instructions for the various registrations in Act 1 to Act 3.

When the user wants the history registration using an electronic receipt to be performed, the user operates the touch panel 4 to provide an instruction to perform the history registration using an electronic receipt. If the touch panel 4 is operated in this manner, the processor 1 determines Yes in Act 1 and proceeds to Act 4.

The processor 11 accesses the receipt server 30 and acquires receipt data based on the instruction of the user (Act 4). Then, the processor 11 proceeds to Act 7.

On the other hand, when the user wants the history registration using the camera 5 to be performed, the user operates the touch panel 4 to provide an instruction to perform the history registration using the camera 5. If the touch panel 4 is operated in this manner, the processor 1 determines Yes in Act 2 and proceeds to Act 5.

The processor 1 controls the camera 5 to capture an image, in accordance with the operation of the user (Act 5). Specifically, the user operates the touch panel 4 to provide an instruction to capture an image in a state where a paper receipt is positioned within the field of vision of the camera 5. The processor 1 causes the camera 5 to capture an image in accordance with the operation, and to thereby generate image data corresponding to an image in which the paper receipt is reflected.

The processor 11 analyzes the image data generated by the camera 5 as described above, and recognizes a commodity code shown in the paper receipt (Act 6). Then, the processor 1 proceeds to Act 7.

In Act 7, the processor 1 extracts each commodity which does not satisfy any exclusion condition indicated by the exclusion condition data 32, among the commodities identified by commodity codes included in the receipt data acquired in Act 4 or recognized in Act 6. The exclusion condition is just an example. It is assumed that the exclusion condition is defined such that a commodity such as fresh food which is repetitively purchased at relatively short intervals is excluded.

The processor 1 updates the history data 33 so as to include a commodity code for identifying the commodity which is extracted as described above (Act 8) . If the history data 33 includes information other than a commodity code, such as purchase date and time, the processor 1 causes the same type of information regarding the commodity extracted as described above to be also included in the history data 33. In this case, the processor 1 recognizes the required data (Act 6) . If the history data is updated and the update is ended, the processor 1 ends the information processing illustrated in FIG. 2 based on the duplication confirmation application 31.

When the user wants to perform the history registration by a manual input, the user operates the touch panel 4 to provide an instruction to perform the history registration by the manual input. If the touch panel 4 is operated in this manner, the processor 1 determines Yes in Act 3 and proceeds to Act 9.

The processor 1 acquires one commodity code in accordance with the operation on the touch panel 4 by the user (Act 9) .

The processor 1 confirms whether or not a commodity identified by the acquired commodity code satisfies any of exclusion conditions indicated by the exclusion condition data 32 (Act 10) . If the commodity does not satisfy the exclusion conditions, the processor 1 determines No in Act 10 and proceeds to Act 11.

The processor 1 updates the history data 33 to include the commodity code acquired in Act 9 (Act 11) . If the history data 33 includes information other than a commodity code, such as purchase date and time, and the same type of information is designated by the user, the processor 1 causes the same type of information to be also included in the history data 33. If the history data is updated and the update is ended, the processor 1 proceeds to Act 12. If the commodity code acquired in Act 9 satisfies the exclusion condition, the processor 1 determines Yes in Act 10 and proceeds to Act 12.

The processor 1 confirms whether or not the registration is ended (Act 12). If an operation for registering another commodity code is performed by the user, the processor 1 determines No in Act 12 and returns to Act 9. If an operating instructing the end of the registration is performed by the user, the processor 1 determines Yes in Act 12, and ends the information processing illustrated in FIG. 2.

When the user of the portable terminal 100 wants confirmation of whether or not a commodity considered to be purchased in a store and the like was previously purchased, the user sets the duplication confirmation mode. The user operates the touch panel 4 to provide an instruction to capture a bar code displayed on a commodity as a confirmation target, in a state where the bar code is positioned in the field of vision of the camera 5.

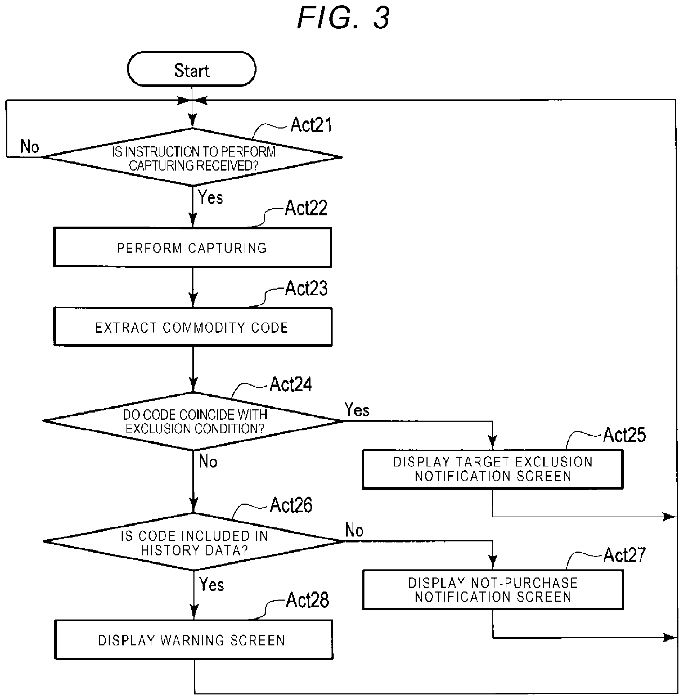

If an instruction to set the duplication confirmation mode is performed by the user, the processor 1 performs the processing illustrated in FIG. 3.

The processor 1 waits for an instruction to perform capturing by the user (Act 21). If the instruction to perform capturing is received as described above, the processor 1 determines Yes in Act 21 and causes the process to proceed to Act 22.

The processor 1 causes the camera 5 to capture an image in accordance with the operation and generate image data corresponding to an image in which the bar code is reflected (Act 22) .

The processor 1 analyzes the image data generated by the camera 5 as described above, and recognizes a commodity code from the bar code (Act 23). Thus, the processor 1 acquires a commodity code as identification information for identifying a commodity based on the duplication confirmation application 31.

The processor 1 confirms whether or not a commodity identified by the extracted commodity code satisfies any of exclusion conditions indicated by the exclusion condition data 32 (Act 24). If the extracted commodity code satisfies the exclusion condition, the processor 1 determines Yes in Act 24 and proceeds to Act 25.

The processor 1 causes the touch panel 4 to display an out-of-target notification screen (Act 25). The out-of-target notification screen is a screen for notifying the user that a commodity as a confirmation target is a commodity which is not the target of the duplication confirmation. Then, the processor 1 returns to the waiting state in Act 21 based on the duplication confirmation application 31.

If the commodity identified by the extracted commodity code does not satisfy any exclusion condition, the processor 1 determines to be No in Act 24 and proceeds to Act 26.

The processor 1 confirms whether or not the extracted commodity code is included in the history data 33 (Act 26). If the extracted commodity code is not included in the history data 33, the processor 1 determines No in Act 26 and proceeds to Act 27. If the extracted commodity code is included in the history data 33, the processor 1 determines Yes in Act 26 and proceeds to Act 28.

In Act 27, the processor 1 controls the touch panel 4 to display a not-purchased notification screen. The not-purchased notification screen is a screen for notifying the user that a commodity as a confirmation target was not previously purchased. Then, the processor 1 returns to the waiting state in Act 21.

In Act 28, the processor 1 controls the touch panel 4 to display a warning screen in the touch panel 4. The warning screen is a screen for warning the user that a commodity as a confirmation target was previously purchased. Then, the processor 1 returns to the waiting state in Act 21 based on the duplication confirmation application 31.

As described above, the portable terminal 100 displays the warning screen for warning the user that a commodity identified by the commodity code was previously purchased when an image of a bar code indicating a commodity code which is indicated by the history data 33 is captured by the camera 5. Thus, the user can confirm whether or not a commodity was previously purchased, by the camera 5 capturing an image of a bar code displayed on the commodity.

According to the portable terminal 100, the warning screen is not displayed for a commodity which satisfies a predetermined exclusion condition. For example, regarding a commodity such as fresh food, which is repetitively purchased over relatively short periods, whether or not the same commodity was previously purchased is not important in many cases. Thus, the warning screen is not displayed for this type of a commodity, and thus it is possible to display the warning screen for only a commodity having high necessity for confirmation for repetitive purchase, and it is possible to improve the effect obtained by displaying the warning screen.

According to the portable terminal 100, the exclusion condition data 32 and the history data 33 are stored in the portable terminal 100. Therefore, the information processing in the duplication confirmation mode can be independently performed in the portable terminal 100 without cooperation with another device. Thus, for example, even in a situation in which it is not possible to perform communication via the communication network 200, it is possible to realize the function of the duplication confirmation.

If the user of the portable terminal 100 is a member of the electronic receipt service, the receipt server 300 accumulates information regarding the previously-purchased commodities of the user of the portable terminal 100. However, the information accumulated in the receipt server 300 is limited to information regarding commodity purchase in a store corresponding to the electronic receipt service. However, the portable terminal 100 stores the history data 33 in the portable terminal 100, and additional information which is different from the information accumulated in the receipt server 300 may be added to the history data 33. Therefore, duplication confirmation is also performed for a commodity which is previously purchased in a store not corresponding to the electronic receipt service.

The portable terminal 100 stores the history data 33 therein. However, the history data 33 is set to not include information regarding a commodity which satisfies the exclusion condition. Therefore, it is possible to significantly reduce the data volume of the history data 33 in comparison to a case where information regarding the purchased commodity is included, regardless of whether or not the commodity satisfies the exclusion condition. Thus, it is possible to minimize storage space in the auxiliary storage device 3 required to store the history data 33, and to effectively utilize the auxiliary storage device 3.

In the portable terminal 100, information managed by the receipt server 300 can be received and stored in the history data 33. Therefore, if the user of the portable terminal 100 is a member of the electronic receipt service, it is possible to easily receive and store information regarding a commodity purchased in a store corresponding to the electronic receipt service, in the history data 33.

According to the portable terminal 100, it is possible to recognize a commodity code from an image obtained by the camera 5 of a paper receipt, in the history data 33. Therefore, when the user of the portable terminal 100 is not a member of the electronic receipt service, or when the user of the portable terminal 100 purchases a commodity in a store which does not correspond to the electronic receipt service, it is possible to easily update the history data 33.

Various modification forms as follows can be obtained from the embodiment.

The processor 1 may acquire a commodity code which is directly input by an operation on the touch panel 4 by a user, instead of the processes of Act 21 to Act 23 illustrated in FIG. 3.

The processor 1 may confirm whether or not the commodity code extracted in Act 23 has a predetermined association with a commodity code included in the history data 33 (Act 26) . For example, the processor 1 may confirm whether or not a commodity code belonging to a commodity category which is the same as a category to which the commodity code extracted in Act 23 belongs is included in the history data 33. That is, specifically, the processor 1 may extract a commodity code of a commodity "milk A" belonging to a commodity category "milk" in Act 23, and may determine to be Yes in Act 26 when a commodity code of another commodity "milk B" belonging to the commodity category "milk" is included in the history data 33.

The exclusion condition data 32 or the history data 33 may be stored in a storage device external to the portable terminal 100. As the storage device, for example, a storage device included in a personal computer installed in a house of the user of the portable terminal 100, a cloud storage connected to the communication network 200, or the like may be provided. The exclusion condition data 32 and the history data 33 may be stored in separate storage devices, respectively. Each of the exclusion condition data 32 and the history data 33 may be divided and stored in a plurality of storage devices.

The operation for various notifications to the user of the portable terminal 100 may be replaced with display of another display device, an output of notification sound, an output of a voice message, generation of vibration, in addition to screen display in the touch panel 4, other operations which can be recognized by the user. In addition, combinations of a plurality of the above operations may be performed.

Processing of sales registration for payment in a store may be performed in the portable terminal 100 and the processes of Act 24 to Act 28 in FIG. 4 may be performed with respect to a commodity code obtained for the sales registration. In this case, the not-purchased notification screen may not be displayed.

Some or all of the functions realized by the processor 1 may be realized by hardware such as a logic circuit, which performs the information processing without the bases of the program. Each of the functions may be realized by combining software control with the hardware such as a logic circuit.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable terminal for confirming a commodity purchase history, the portable terminal comprising:
a display device;
a storage device that stores:
purchase history data including an identification code of each of a plurality of commodities previously purchased by a user of the portable terminal, and
exclusion condition data including an exclusion condition for which a commodity is excluded from confirming the commodity purchase history;
an input device configured to receive input of an identification code corresponding to a target commodity; and
a processor configured to:
determine whether the received identification code received satisfies the exclusion condition,
if the commodity corresponding to the received identification code satisfies the exclusion condition, control the display device to display an exclusion screen indicating that the target commodity is not a target for confirming the commodity purchase history,
if the commodity corresponding to the received identification code does not satisfy the exclusion condition, determine whether the received identification code is included in the stored purchase history data, and
if the received identification code is included in the stored purchase history data, control the display device to display a warning screen indicating that the target commodity was previously purchased.

2. The portable terminal according to claim 1, further comprising:
a communication interface configured to communicate with an electronic receipt server, wherein the processor is further configured to:
control the communication interface to acquire, from the electronic receipt server, electronic receipt data corresponding to a user identification that identifies the user, and
control the storage device to update the purchase history data to include an identification code of at least one commodity included in the acquired electronic receipt data.

3. The portable terminal according to claim 2, wherein:
the processor is further configured to determine whether the at least one commodity corresponding to the identification code included in the acquired electronic receipt data satisfies the exclusion condition, and
the processor controls the storage device to not store the identification code corresponding to the identification code that satisfies the exclusion condition.

4. The portable terminal according to any of claims 1 to 3, wherein:
the input device is a camera that generates image data, and
the processor is further configured to extract the identification code corresponding to the target commodity from generated image data corresponding to an image of the target commodity.

5. The portable terminal according to claim 4, wherein the processor is further configured to:
extract, from generated image data corresponding to an image of a paper receipt, an identification code of at least one commodity included in the paper receipt, and
control the storage device to update the purchase history data to include the identification code of at least one commodity extracted from the image data corresponding to the image of the paper receipt.

6. The portable terminal according to any of claims 1 to 5, wherein the processor is further configured to:
if the commodity corresponding to the received identification code does not satisfy the exclusion condition and if the received identification code is not included in the stored purchase history data, control the display device to display a not-purchased screen indicating that the target commodity was not previously purchased.

7. The portable terminal according to any of claims 1 to 6,
wherein:
the display device is a touch screen device configured to receive, from the user, input of an identification code corresponding to an identification code corresponding to a previously purchased commodity, and
the processor is further configured to control the storage device to update the purchase history data to include the identification code input via the touch screen device.

8. A method for confirming a commodity purchase history with a portable terminal, the method comprising:
storing, in a storage device of the portable terminal, purchase history data including an identification code of each of a plurality of commodities previously purchased by a user of the portable terminal;
storing exclusion condition data including an exclusion condition for which a commodity is excluded from confirming the commodity purchase history;
receiving input of an identification code corresponding to a target commodity;
determining whether the received identification code received satisfies the exclusion condition;
if the commodity corresponding to the received identification code satisfies the exclusion condition, controlling a display device of the portable terminal to display an exclusion screen indicating that the target commodity is not a target for confirming the commodity purchase history;
if the commodity corresponding to the received identification code does not satisfy the exclusion condition, determining whether the received identification code is included in the stored purchase history data; and
if the received identification code is included in the stored purchase history data, controlling the display device to display a warning screen indicating that the target commodity was previously purchased.

9. The method according to claim 8, further comprising:
acquiring, from and electronic receipt server, electronic receipt data corresponding to a user identification that identifies the user; and
updating the purchase history data to include an identification code of at least one commodity included in the acquired electronic receipt data.

10. The method according to claim 9, further comprising:
determining whether the at least one commodity corresponding to the identification code included in the acquired electronic receipt data satisfies the exclusion condition, wherein
the purchase history data is not updated to include the identification code corresponding to the identification code that satisfies the exclusion condition.

11. The method according to any of claims 8 to 10, wherein the input of the identification code corresponding to a target commodity is image data corresponding to an image of the target commodity, the method further comprising:
extracting the identification code corresponding to the target commodity from the image data.

12. The method according to any of claims 8 to 11, wherein the display device is a touch screen device, the method further comprising:
receiving, via the touch screen device, input of an identification code corresponding to an identification code corresponding to a previously purchased commodity; and
updating the purchase history data to include the identification code input via the touch screen device.

13. A non-transitory computer readable medium causing a portable terminal to perform a method for confirming a commodity purchase history, the method comprising:
storing, in a storage device of the portable terminal, purchase history data including an identification code of each of a plurality of commodities previously purchased by a user of the portable terminal;
storing exclusion condition data including an exclusion condition for which a commodity is excluded from confirming the commodity purchase history;
receiving input of an identification code corresponding to a target commodity;
determining whether the received identification code received satisfies the exclusion condition;
if the commodity corresponding to the received identification code satisfies the exclusion condition, controlling a display device of the portable terminal to display an exclusion screen indicating that the target commodity is not a target for confirming the commodity purchase history;
if the commodity corresponding to the received identification code does not satisfy the exclusion condition, determining whether the received identification code is included in the stored purchase history data; and
if the received identification code is included in the stored purchase history data, controlling the display device to display a warning screen indicating that the target commodity was previously purchased.

14. The non-transitory computer readable medium according to claim 13, the method further comprising:
acquiring, from and electronic receipt server, electronic receipt data corresponding to a user identification that identifies the user; and
updating the purchase history data to include an identification code of at least one commodity included in the acquired electronic receipt data.

15. The non-transitory computer readable medium according to claim 14, the method further comprising:
determining whether the at least one commodity corresponding to the identification code included in the acquired electronic receipt data satisfies the exclusion condition, wherein
the purchase history data is not updated to include the identification code corresponding to the identification code that satisfies the exclusion condition.
